# EUROPEAN PATENT APPLICATION

(11) **EP 1 962 307 A1**
(43) Date of publication of application: **27.08.2008**
(21) Application number: 06834405.0
(22) Date of filing: 11.12.2006
(51) Int. Cl.: H01G 9/008

(54) **CAPACITOR**

(30) Priority: 13.12.2005 JP 2005358763; 04.08.2006 JP 2006213166
(71) Applicant: MATSUSHITA ELECTRIC INDUSTRIAL CO., LTD., Osaka 571-8501 (JP)
(72) Inventor: MIURA, Teruhisa c/o Matsushita Electric Indusrial Co.,Ltd., IPROC,, Chuo-ku,Osaka-shi,Osaka, 540-6207 (JP); KAWASAKI, Shusaku c/o Matsushita Electric Industrial Co., Ltd. IPROC, Chuo-ku,Osaka-shi,Osaka,540-6207 (JP); SHIMAMOTO, Hideki c/o Matsushita Electric Industrial Co. Ltd., IPROC, Chuo-ku, Osaka-shi, Osaka, 540-6207 (JP); INOUE, Tatehiko c/o Matsushita Electric Industrial Co., Ltd. IPROC, Chuo-ku, Osaka-shi, Osaka, 540-6207 (JP)
(74) Representative: Pautex Schneider, Nicole Véronique
(86) International application number: PCT/JP2006/324650
(87) International publication number: WO 2007/069559

(57) **Abstract**

In a capacitor, a capacitor elements of which positive and negative electrodes are drawn out in reverse directions is put in a metal case, and one electrode is bonded to the inner bottom of the metal case, and other electrode of the capacitor element is bonded to the inner side, and on the surface of a terminal plate sealing the opening of the metal case, a junction part of flat plate projecting to a position higher than the metal case is provided.

## Description

### TECHNICAL FIELD

The present invention relates to a capacitor used in various electronic appliances, backup power and regenerative power for hybrid cars and fuel cell vehicles, or electric power storage and other purposes.

### BACKGROUND ART

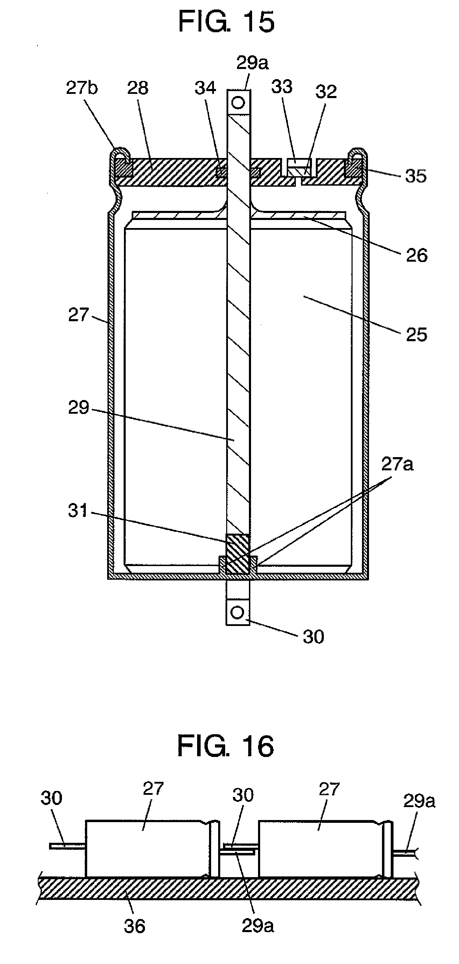

FIG. 15 is a sectional view showing a structure of a conventional capacitor. As shown in FIG. 15, the conventional capacitor has capacitor element 25. Capacitor element 25 is formed by winding a pair of positive and negative electrodes forming polarizable electrode layers formed on a current collector made of an aluminum foil by deviating positions mutually in reverse directions, with a separator interposed between them. The capacitor is configured so that an anode and a cathode may be taken out respectively from on sides of capacitor element 25 (upper and lower sides in FIG. 15).

The conventional capacitor includes metal plate 26 connected to one of the electrodes of capacitor element 25, metal case 27 of cylindrical shape with a bottom formed of aluminum including capacitor element 25 together with an electrolyteelectrolyte (not shown), protrusion 27a provided in the inner bottom of metal case 27, insulating sealing plate 28 sealing the opening of metal case 27, bar-like core member 29 having terminal 29a for external connection at one end, terminal 30 for external connection bonded to the outer surface of metal case 27, insulating member 31 for insulating core member 29 and metal case 27, closing element 32 made of rubber -like elastic insulating member to be combined with cap 33 to compose a pressure regulating valve, O-ring 34, and sealing rubber 35 disposed on an upper peripheral edge of sealing plate 28 for sealing by being compressed by curling process (curled part 27b) at the opening end of metal case 27.

Thus, in the conventional capacitor, one of the electrodes of capacitor element 25 is electrically bonded to the inner bottom of metal case 27 of cylindrical shape with a bottom, and metal plate 26 is bonded to other electrode of capacitor element 25, and terminal 29a for external connection is provided, and bar-like core member 29 and metal plate 26 disposed in a center area of capacitor element 25 are bonded, and the opening of metal case 27 is sealed by sealing plate 28 having a hole through which terminal 29a for external connection penetrates. By such configuration, metal case 27 plays the role of current collecting terminal, and the height is lowered substantially, and the number of parts may be curtailed.

Further, as shown in FIG. 16, terminals 29a, 30 of flat plate for external connection of the conventional capacity having such configuration are disposed to be deviated in a direction contradictory by reference to the central axis of metal case 27. By such configuration, when connecting a plurality of capacitors, both terminals 29a, 30 contact with each other from the boundary of the central axis of metal case 27, and when put on the upside of substrate 36 or the like, the capacitors are not loose but are connected and coupled at high precision. Therefore, by coupling a plurality of the capacitors, a capacitor unit is formed, and used as a car-mount backup power supply or the like.

As a prior art relating to the present invention of the present application, for example, patent document 1 is known.

In the conventional capacitor, however, as shown in Fig. 16, when a plurality of the capacitors are coupled and used as a capacitor unit, in the case of connecting terminals 29a, 30 for external connection, the individual terminals are drawn out mutually in contradictory directions, and the connection job is complicated, and a connecting space for the portion of height of terminal is needed at both ends, and a large mounting space is needed, and the size cannot be reduced.

To solve this problem, as means for taking out the anode terminal and the cathode terminal from a same direction, lead members for taking out externally are connected to a pair of positive and negative electrodes forming polarizable electrode layers on a current collector made of aluminum foil, and by winding the pair of positive and negative electrodes to which the lead members are connected, the anode terminal and the cathode terminal may be taken out from the same direction. In this method, however, since the electrode is taken out from one position (or plural positions) of a long band-like electrode, the resistance is largely increased as compared with the structure known as end face current collector for taking out the electrode from the entire end surface of capacitor element 25. Therefore, a capacitor unit cannot be used by coupling a plurality of capacitors.
[Patent document 1] Unexamined Japanese Patent Publication No. 2000-315632

### DISCLOSURE OF THE PRESENT INVENTION

The capacitor of the present invention includes a capacitor element formed so that ends of positive and negative electrodes may be exposed in mutually reverse directions, a metal case of cylindrical shape with a bottom including this capacitor element together with the electrolyteelectrolyte, and having one of the electrodes of the capacitor element bonded to the inner bottom, and a terminal plate having other electrode of the capacitor element bonded to the inner face and sealing the opening of the metal case, in which the surface of the terminal plate is provided with a flat junction to project to a position higher than the height of the metal case after sealing.

In such configuration, positive and negative electrodes may be taken out from the terminal plate and the metal case, and from the same direction, and hence the connection is easy, and the connection space may be saved. Further, by the junction provided on the surface of the terminal plate, a plurality of capacitors may be coupled through a connecting plate at a minimum required height, and hence the height may be further lowered.

### BRIEF DESCRIPTION OF THE DRAWINGS

FIG. 1A is a plan view of configuration of a capacitor in preferred embodiment 1 of the present invention.
FIG. 1B is a front sectional view of configuration of the capacitor in preferred embodiment 1 of the present invention.
FIG. 1C is a bottom view of configuration of the capacitor in preferred embodiment 1 of the present invention.
FIG. 2A is a plan view of two capacitors coupled together in preferred embodiment 1 of the present invention.
FIG. 2B is a front sectional view of two capacitors coupled together in preferred embodiment 1 of the present invention.
FIG. 2C is a bottom view of two capacitors coupled together in preferred embodiment 1 of the present invention.
FIG. 3A is a conceptual diagram of an example of coupling a plurality of capacitors in preferred embodiment 1 of the present invention.
FIG. 3B is a conceptual diagram of an example of coupling a plurality of capacitors in preferred embodiment 1 of the present invention.
FIG. 4A is a plan view of configuration of a capacitor in preferred embodiment 2 of the present invention.
FIG. 4B is a front sectional view of configuration of the capacitor in preferred embodiment 2 of the present invention.
FIG. 4C is a bottom view of configuration of the capacitor in preferred embodiment 2 of the present invention.
FIG. 5A is a plan view of two capacitors coupled together in preferred embodiment 2 of the present invention.
FIG. 5B is a front sectional view of two capacitors coupled together in preferred embodiment 2 of the present invention.
FIG. 5C is a bottom view of two capacitors coupled together in preferred embodiment 2 of the present invention.
FIG. 6A is a plan view of configuration of a capacitor in preferred embodiment 3 of the present invention.
FIG. 6B is a front sectional view of configuration of the capacitor in preferred embodiment 3 of the present invention.
FIG. 6C is a bottom view of configuration of the capacitor in preferred embodiment 3 of the present invention.
FIG. 7 is a sectional view of two capacitors coupled together in preferred embodiment 3 of the present invention.
FIG. 8 is a sectional view of two capacitors coupled together in preferred embodiment 4 of the present invention.
FIG. 9A is a perspective view of a sleeve used in a capacitor in preferred embodiment 4 of the present invention.
FIG. 9B is a front view of the sleeve used in the capacitor in preferred embodiment 4 of the present invention.
FIG. 10 is a sectional view of two capacitors coupled together in preferred embodiment 5 of the present invention.
FIG. 11A is a plan view of a connection bar in preferred embodiment 6 of the present invention.
FIG. 11B is a front sectional view of the connection bar in preferred embodiment 6 of the present invention.
FIG. 11C is a side sectional view of the connection bar in preferred embodiment 6 of the present invention.
FIG. 12A is a plan view of coupled state of capacitor in preferred embodiment 6 of the present invention.
FIG. 12B is a front view of coupled state of capacitor in preferred embodiment 6 of the present invention.
FIG. 12C is a bottom view of coupled state of capacitor in preferred embodiment 6 of the present invention.
FIG. 13 is a plan view of a connection bar in preferred embodiment 6 of the present invention.
FIG. 14A is a plan view of coupled state of capacitor in preferred embodiment 6 of the present invention.
FIG. 14B is a front view of coupled state of capacitor in preferred embodiment 6 of the present invention.
FIG. 14C is a side view of coupled state of capacitor in preferred embodiment 6 of the present invention.
FIG. 15 is a sectional view of a conventional capacitor.
FIG. 16 is a side view of a coupled state of a plurality of conventional capacitors.

### DESCRIPTION OF THE REFERENCE NUMERALS

- 1: Capacitor element
- 2, 10, 15: Metal case
- 2a, 3b, 10a, 11b, 15a, 16b: Recess
- 2b, 3c, 9a, 10b, 11c, 12a, 12b: Weld mark
- 2c, 15c: Drawn part
- 2d, 10c, 15b: Curled part
- 2e: Bottom
- 3, 11, 16: Terminal plate
- 3a, 11a, 16a: Junction part
- 3d: Electrolytic solution injection hole
- 4: Insulating member
- 5: Sealing rubber
- 6: Rubber plug
- 7, 13, 17: First capacitor
- 8, 14, 18: Second capacitor
- 9, 12, 19, 24: Connection bar
- 9b: Flat plate part
- 9c: External terminal
- 20: Sleeve
- 20a: Notch
- 21: Upper holder
- 21a: Protrusion
- 22: Lower holder

### DETAILED DESCRIPTION OF THE PREFERRED EMBODIMENTS

Preferred embodiments of the present invention are specifically described below while referring to the accompanying drawings.

### (Preferred embodiment 1)

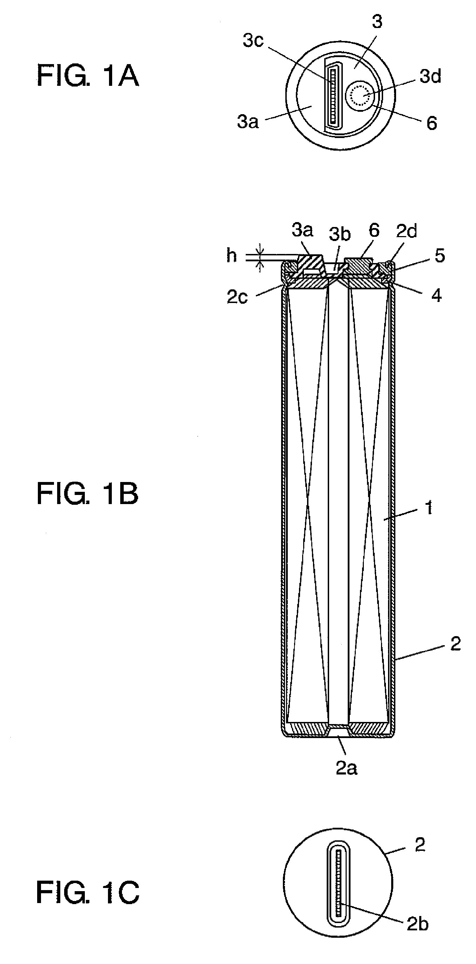

FIGS. 1A, 1B, 1C show a plan view, a front sectional view, and a bottom view of the capacitor according to preferred embodiment 1 of the present invention, respectively. As shown in FIGS. 1A, 1B, 1C, the capacitor has capacitor element 1. Capacitor element 1 is formed by winding a pair of positive and negative electrodes forming polarizable electrode layers formed on a current collector made of an aluminum foil as a metal foil by deviating positions mutually in reverse directions, with a separator interposed between them (none shown), and an anode and a cathode are taken out from both sides of capacitor element 1 (upper and lower sides in FIG. 1B). That is, capacitor element 1 is configured so that ends of positive and negative elements may be exposed mutually in reverse directions.

The capacitor includes metal case 2 of cylindrical shape with a bottom formed of aluminum including capacitor element 1 together with an electrolyteelectrolyte (not shown), and recess 2a provided in the bottom of metal case 2. An electrode exposed to one end of capacitor element 1 is pressed to the inner side of recess 2a, and laser light is emitted from the outer bottom side of metal case 2 for laser welding. As a result, weld mark 2b by laser welding is left over on the outer bottom of metal case 2. By joining by laser welding, the inner bottom of metal case 2 and its electrode are connected mechanically and electrically.

Further, the capacitor includes terminal plate 3, and junction part 3a provided in part of upside (surface) of terminal plate 3. Junction part 3a has protrusion allowance h for projecting to a position higher than the height of metal case 2 having curled part 2d provided by curling process described below. Recess 3b is provided in the surface of terminal plate 3. The bottom of recess 3b is pressed to the electrode exposed at other end of capacitor element 1, and laser light is emitted from the surface side of terminal plate 3 for laser welding. As a result, weld mark 3c by laser welding is left over on the surface of terminal plate 3. By joining by laser welding, the inner side of terminal plate 3 and its electrode are connected mechanically and electrically.

The capacitor also has an annular insulating member 4 made of an insulating material. Insulating member 4 is disposed in the upper part of the inner periphery of drawn part 2c drawn near the opening of metal case 2 in which capacitor element 1 is inserted. Terminal plate 3 is disposed on insulating member 4.

The capacitor also has sealing rubber 5 disposed on the upper peripheral edge of terminal plate 3. Sealing rubber 5 is compressed by curled part 2d, and seals the opening end of metal case 2.

The capacitor also has rubber plug 6. Rubber plug 6 is pressed in to plug electrolytic solution injection hole 3d after an electrolyteelectrolyte not shown is injected into metal case 2 from electrolytic solution injection hole 3d provided in terminal plate 3. Rubber plug 6 is made of butyl rubber (IIR) or ethylene propylene terpolymer (EPT) or the like, and its leading end portion to be inserted into metal case 2 from the surface side of terminal plate 3 has a flange formed in a tapered flange shape. After passing through electrolytic solution injection hole 3d, the flange of rubber plug 6 is engaged the reverse side of terminal late 3 to prevent from slipping out.

To prevent short-circuiting between the electrode exposed to the end of the side joining with terminal plate 3 of capacitor element 1 and the inner periphery of metal case 2 in its vicinity, an insulating tape not shown is adhered, but this insulating tape may be omitted if the inner periphery of metal case 2 in the corresponding area is insulated by coating.

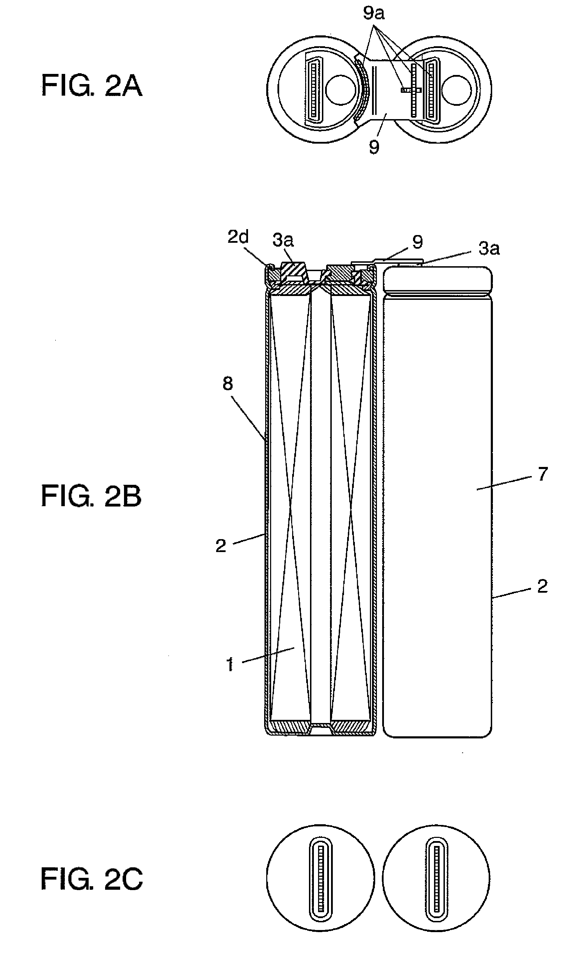

FIGS. 2A, 2B, 2C show a plan view, a front sectional view, and a bottom view of two capacitors coupled together according to preferred embodiment 1, respectively. As shown in FIG. 2B, first capacitor 7 and second capacitor 8 are connected in series. First capacitor 7 and second capacitor 8 are connected by means of connection bar 9. Connection bar 9 has a taper provided in the center, and is formed like stair steps. The higher side of connection bar 9 is joined by laser welding to junction part 3a provided in terminal plate 3 of first capacitor 7. As a result, weld mark 9a is formed at the higher side of connection bar 9. The lower side of connection bar 9 is joined by laser welding to curled part 2d of metal case 2 of adjacent second capacitor 8. As a result, weld mark 9a is formed at the lower side of connection bar 9.

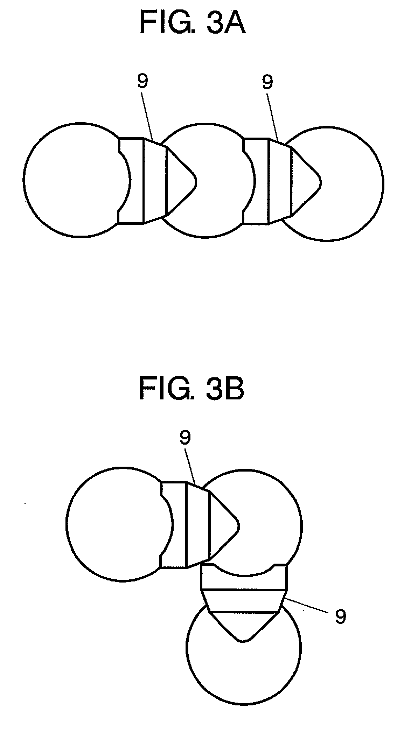

FIGS. 3A, 3B are conceptual diagrams showing examples of connection of a plurality of the capacitors by using connection bar 9 shown in FIG. 2A. FIG. 3A shows a plurality of the capacitors coupled in a straight line, and FIG. 3B shows a plurality of the capacitors coupled freely, not in a straight line.

The capacitor of preferred embodiment 1 has such configuration, and therefore the positive and negative electrodes of capacitor element 1 may be taken out from terminal plate 3 and metal case 2, and from the same direction. Accordingly, when a plurality of the capacitors are connected and coupled together, the connection is easy, and the connection space is saved, so that a smaller size is realized.

### (Preferred embodiment 2)

Preferred embodiment 2 is similar to preferred embodiment 1, except that the junction part provided in the terminal plate of the capacitor explained in preferred embodiment 1 is provided at two positions on the peripheral edge of the terminal plate, and corresponding parts are identified with same reference numerals, and detailed description is omitted, and only different parts are explained below along with the accompanying drawings.

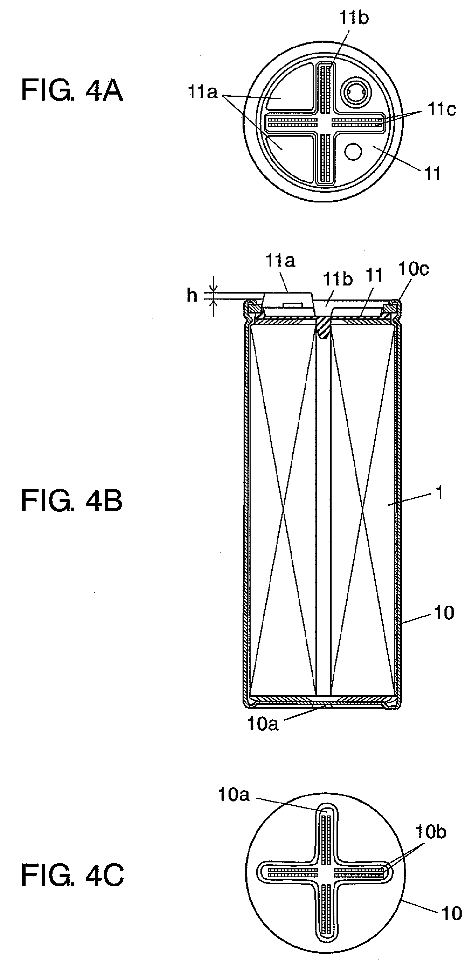

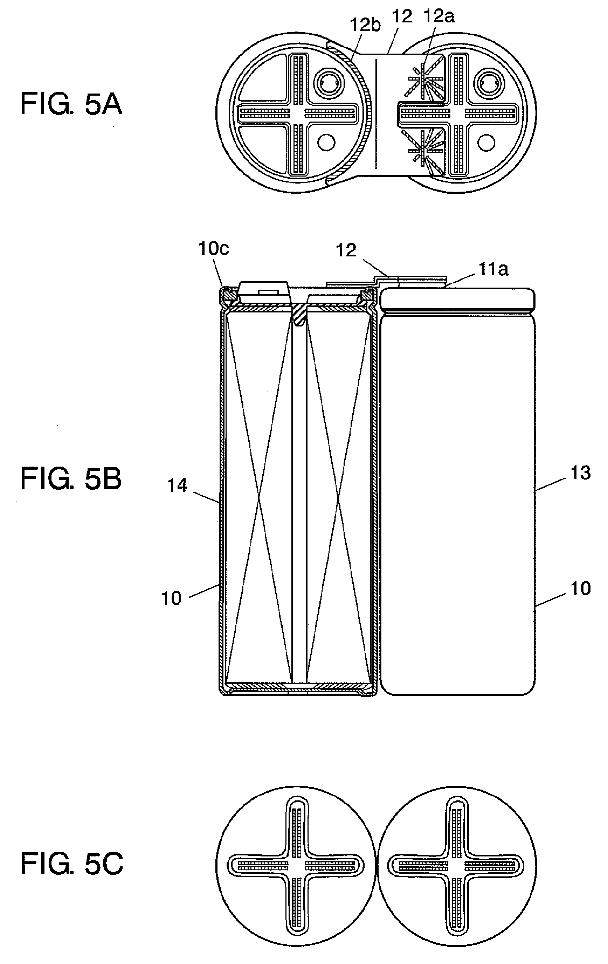

FIGS. 4A, 4B, 4C show a plan view, a front sectional view, and a bottom view of the capacitor according to preferred embodiment 2 of the present invention, respectively. FIGS. 5A, 5B, 5C show a plan view, a front sectional view, and a bottom view of two capacitors coupled together, respectively, and the capacitors in preferred embodiment 2 are of type of large size and large capacity (large current).

As shown in FIGS. 4A, 4B, 4C, the capacitor includes metal case 10, and recess 10a provided in the bottom of metal case 10. An electrode exposed to one end of capacitor element 1 is pressed to the inner side of recess 10a, and laser light is emitted from the outer bottom side of metal case 10 for laser welding. As a result, weld mark 10b by laser welding is left over on the outer bottom of metal case 10. By joining by laser welding, the inner bottom of metal case 10 and its electrode are connected mechanically and electrically. In preferred embodiment 2, two weld marks 10b are provided in recess 10a in order to withstand a large current.

The capacitor has a terminal plate 11 and junction part 11a provided in a part (two positions in FIG. 4A) of peripheral edge of the upside (surface) of terminal plate 11. Junction part 11a has protrusion allowance h for projecting to a position higher than the height of metal case 10 having curled part 10c provided by curling process. Recess 11b is provided in the surface of terminal plate 11. The bottom of recess 11b is pressed to the electrode exposed at other end of capacitor element 1, and laser light is emitted from the surface side of terminal plate 11 for laser welding. As a result, weld mark 11c by laser welding is left over on the surface of terminal plate 11. By joining by laser welding, the inner side of terminal plate 11 and its electrode are connected mechanically and electrically. In preferred embodiment 2, same as in metal case 10, two weld marks 10c are provided in recess 11a in order to withstand a large current.

As shown in FIGS. 5A, 5B, 5C, the capacitor has connection bar 12 for connecting two capacitors. Connection bar 12 has a taper provided in the center, and is formed like stair steps. The higher side of connection bar 12 is joined by laser welding to junction part 11a provided in terminal plate 11 of first capacitor 13. As a result, weld mark 12a is formed at the higher side of connection bar 12. The lower side of connection bar 12 is joined by laser welding to curled part 10c of metal case 10 of adjacent second capacitor 14. As a result, weld mark 12b is formed at the lower side of connection bar 12. In this manner, first capacitor 13 and second capacitor 14 are connected in series. In preferred embodiment 2, same as in metal case 10 or terminal plate 11, in order to withstand a large current, weld mark 12a of connection bar 12 formed in a radial shape, and weld mark 12b is formed in a wide shape.

The capacitor of preferred embodiment 2 has such configuration, and is increased in size, and if a large current of hundreds of mA is applied, the bond strength of laser welding positions is sufficiently assured, and a capacity of high reliability is realized.

### (Preferred embodiment 3)

Preferred embodiment 3 is similar to preferred embodiment 1, except that the junction part provided in the terminal plate of the capacitor explained in preferred embodiment 1 is provided in the center of the terminal plate, and corresponding parts are identified with same reference numerals, and detailed description is omitted, and only different parts are explained below along with the accompanying drawings.

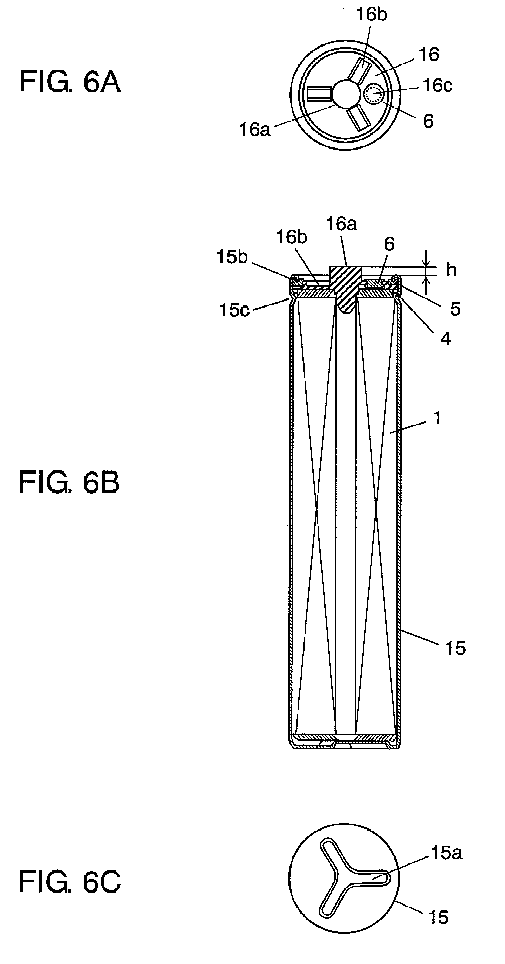

FIGS. 6A, 6B, 6C show a plan view, a front sectional view, and a bottom view of the capacitor according to preferred embodiment 3 of the present invention, respectively. As shown in FIG. 6B, the capacitor of preferred embodiment 3 includes metal case 15, and recess 15a provided in the bottom of metal case 15. An electrode exposed to one end of capacitor element 1 is pressed to the inner side of recess 15a, and laser light is emitted from the outer bottom side of metal case 15 for laser welding, and by joining by laser welding or other means, the inner side of recess 15a and its electrode are connected mechanically and electrically.

The capacitor has a terminal plate 16 and junction part 16a provided in the center of the upside (surface) of terminal plate 16. Junction part 16a has protrusion allowance h for projecting to a position higher than the height of metal case 15 having curled part 15b provided by curling process. Recess 16b is provided in the surface of terminal plate 16. The bottom of recess 16b is pressed to the electrode exposed at other end of capacitor element 1, and laser light is emitted from the surface side of terminal plate 16 for laser welding. By joining by laser welding, the inner side of terminal plate 16 and its electrode are connected mechanically and electrically.

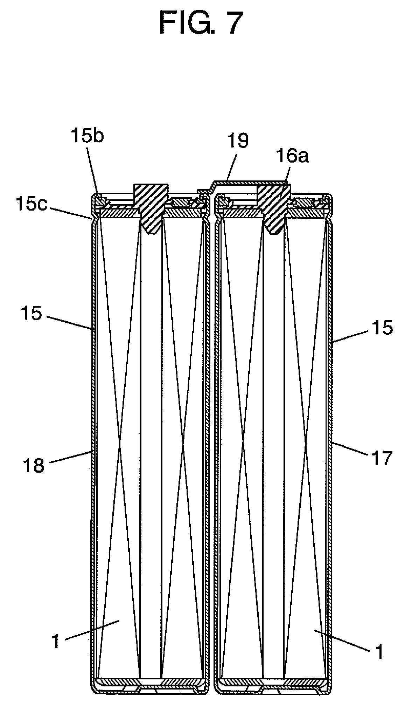

FIG. 7 is a sectional view of two capacitors coupled together according to preferred embodiment 3. As shown in FIG. 7, the capacitor has first capacitor 17, second capacitor 18, and connection bar 19, and connection bar 19 has a taper provided in the center, and is formed like stair steps. The higher side of connection bar 19 is joined by laser welding to junction part 16a provided in terminal plate 16 of first capacitor 17, and its lower side is joined by laser welding to curled part 15b of metal case 15 of adjacent second capacitor 18. As a result, first capacitor 17 and second capacitor 18 are connected in series.

The capacitor of preferred embodiment 3 has such configuration, and same as in the capacitor of preferred embodiment 1, when a plurality of the capacitors are connected and coupled together, the connection is easy, and the connection space is saved, so that a smaller size is realized.

### (Preferred embodiment 4)

Preferred embodiment 4 is similar to preferred embodiment 1, except that an insulating sleeve is fitted to the outer periphery of the metal case of the capacitor explained in preferred embodiment 1, and corresponding parts are identified with same reference numerals, and detailed description is omitted, and only different parts are explained below along with the accompanying drawings.

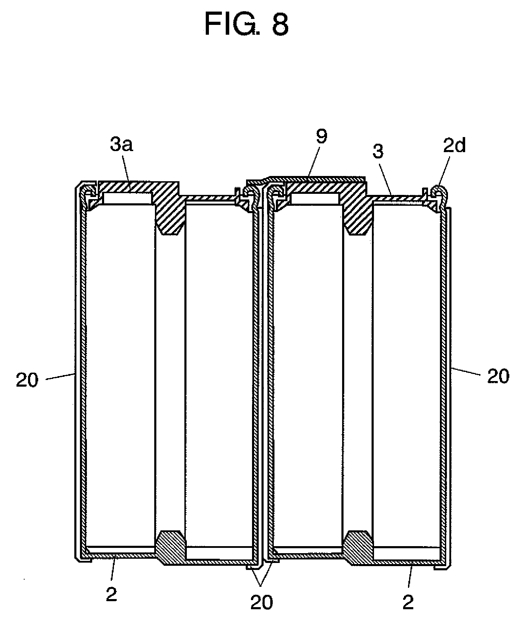

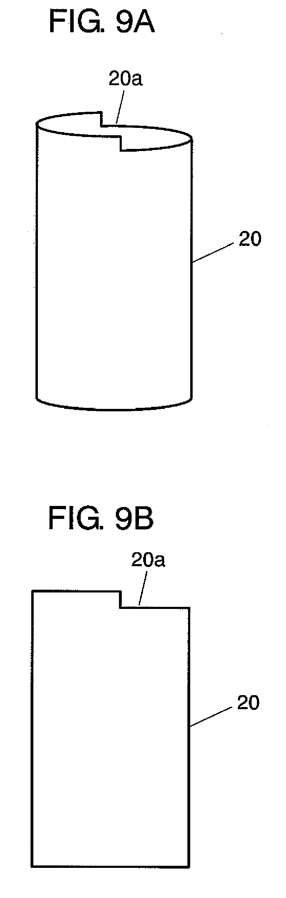

FIG. 8 is a sectional view of two capacitors coupled together according to preferred embodiment 4 of the present invention. FIGS. 9A, 9B show a perspective view and a front view of the sleeve used in the capacitor of preferred embodiment 4, respectively. As shown in FIG. 8, FIGS. 9A, 9B, insulating sleeve 20 is fitted to the outer periphery of metal case 2 of the capacitor. Sleeve 20 is a tube formed of heat-shrinkable insulating resin, and notch 20a is provided in part of the upper end side. By disposing notch 20a in the peripheral edge except for the portion of junction part 3a provided in terminal plate 3, curled part 2d of metal case 2 is exposed. The portion free from notch 20a is designed to cover curled part 2d of metal case 2 in the peripheral edge of junction part 3a provided in terminal plate 3.

The capacitor of preferred embodiment 4 has such configuration, and since insulating sleeve 20 is fitted to the outer periphery of metal case 2, when connecting and coupling a plurality of capacitors, if adjacent metal cases 2 contact with each other, there is no risk of short-circuiting, and a much smaller size is realized. Moreover, since curled part 2d of metal case 2 in peripheral edge of junction part 3a provided in terminal plate 3 is covered with sleeve 20, short-circuiting does not occur if curled part 2d and connection bar 9 contact with each other. Hence, junction part 3a may be formed at a lower height, and the overall height may be much lowered.

### (Preferred embodiment 5)

Preferred embodiment 5 is similar to preferred embodiment 3, except that an insulating holder is fitted individually at the upper end and the lower end of the metal case of the capacitor explained in preferred embodiment 3, and corresponding parts are identified with same reference numerals, and detailed description is omitted, and only different parts are explained below along with the accompanying drawings.

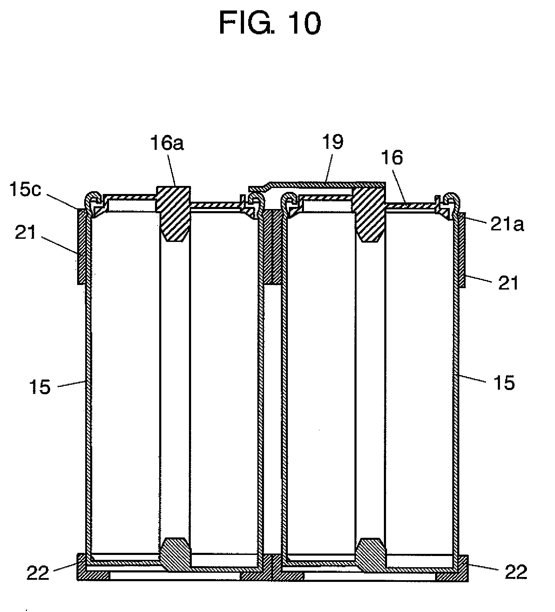

FIG. 10 is a sectional view of two capacitors coupled together according to preferred embodiment 5 of the present invention. As shown in FIG. 10, the capacitor has annular upper holder 21 made of insulating resin fitted to the upper end of metal case 15. Protrusion 21a is formed in the inner periphery of the upper end of upper holder 21, and protrusion 21a is fitted and coupled to drawn part 15c of metal case 15.

The capacitor also has annular lower holder 22 made of insulating resin fitted to the lower end of metal case 15. Lower holder 22 is formed to contact with the bottom peripheral edge of metal case 15 and its linking outer periphery. Therefore, the bottom peripheral edge of metal case 15 and its linking outer periphery are coupled as lower holder 22 is fitted to from the bottom side of metal case 15.

In the capacitor of preferred embodiment 5 having such configuration, the insulating holders are fitted from both upper end and lower end of metal case 15. Therefore, when connecting and coupling a plurality of capacitors, the adjacent capacitors may be positioned accurately, and if the adjacent capacitors contact with each other, short-circuiting is not formed, and the size may be further reduced.

In preferred embodiment 5, lower holder 22 to be fitted to the lower end of metal case 15 is formed independently to be fitted to each capacitor, but the invention is not limited to this example, and a plurality of lower holders 22 may be formed integrally to be coupled to a plurality of capacitors. As a result, the dimensional precision may be further enhanced.

### (Preferred embodiment 6)

Referring to preferred embodiment 6, the present invention as set forth in claim 6 is particularly described below.

Preferred embodiment 6 is similar to preferred embodiment 1, except that connection bar 9 of the capacitor in preferred embodiment 1 is modified as follows.

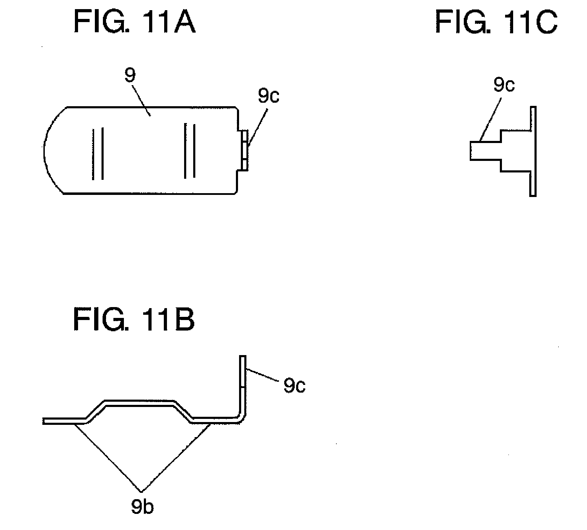

FIGS. 11A, 11B, 11C show a plan view, a front sectional view, and a side sectional view of connection bar 9 in preferred embodiment 6 of the preset invention. As shown in FIG. 11B, connection bar 9 has flat plate part 9b.

In part of connection bar 9, flat plate part 9b is formed, for example, by bending almost perpendicularly, and further external terminal 9c is provided by plating the leading end of connection bar 9 with Sn or Ni.

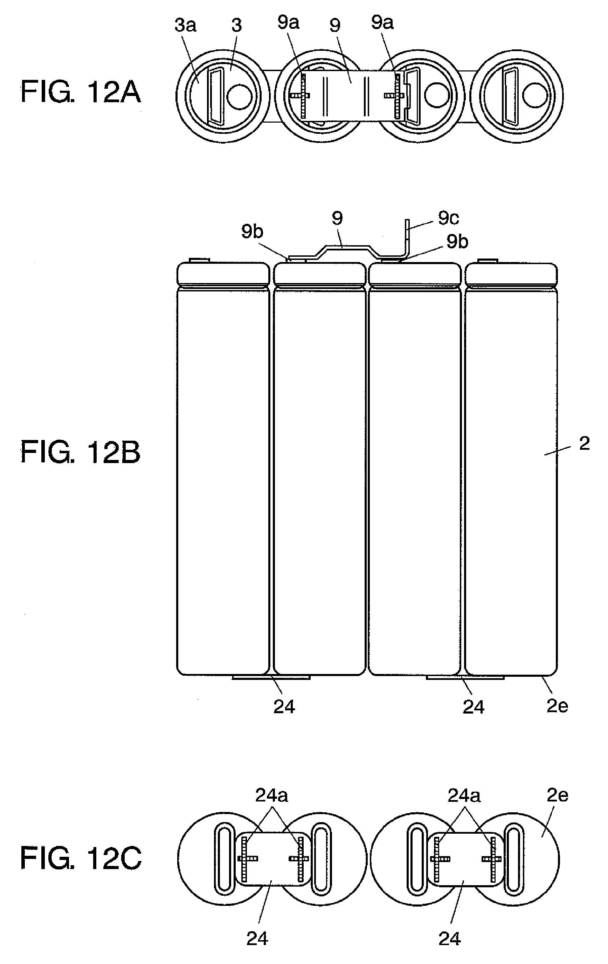

FIGS. 12A, 12B, 12C show a plan view, a side view, and a bottom view of capacitors of preferred embodiment 1 by using connection bar 9.

As shown in FIGS. 12A, 12B, 12C, flat plate part 9b of connection bar 9 connects junction part 3a of terminal plate 3 of a different capacitor. Connection bar 24 connects bottom 2e of metal case 2 of a different capacitor. Thus, using connection bars 9, 24, the capacitors may be connected in series or in parallel.

In such configuration, external terminal 9c is provided near junction part 3a of the capacitor, and in a connected state of a plurality of capacitors, the state of a capacitor alone may be checked electrically through external terminal 9c.

Conventionally, by using a terminal separate from connection bar 9, electrical checking was done, and a terminal jig was needed. Or depending on the connection state of the terminal, accurate measurement was impossible, but according to preferred embodiment 6, accurate measurement is possible by an extremely simple operation.

Alternatively, when external terminal 9c is directly inserted into a hole in a circuit board (not shown), it may be connected by soldering. Therefore, the number of members is curtailed, and the cost may be saved.

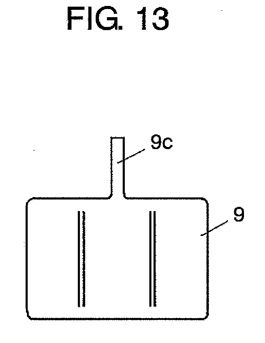

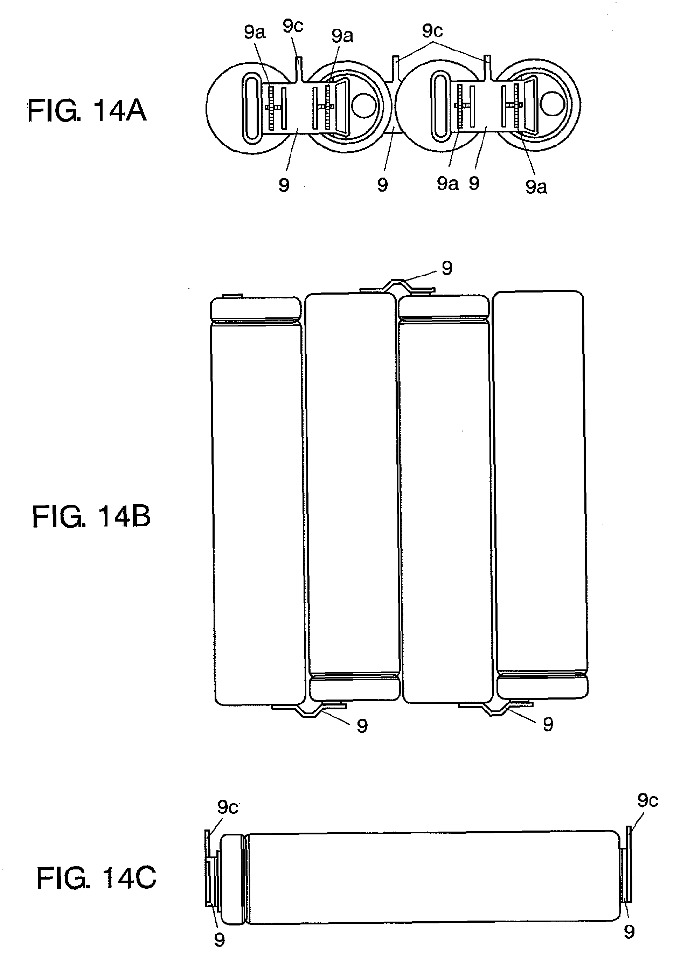

Further, as shown in FIG. 13, external terminal 9c may be fitted horizontally to the connection plane of connection bar 9, or as shown in a plan view, a front view, and a side view in FIGS. 14A, 14B, 14C, same effects are obtained by connection of connection bar 9.

As shown in FIG. 11B, flat plate part 9b is a formed in a same plane, but it may be changed depending on the height of the capacitor to be connected. Thus, the present invention may be applied if the height of the capacitor to be connected is different.

The step of plating the leading end of connection bar 9 with Sn or Ni may be done, for example, as follows.

First of all, the leading end of connection bar 9 is degreased, and etched by using a commercial etching solution. Consequently, using Zn, displacement process and its peeling process are repeated. In the displacement process, a commercial solution may be used, and a nitric acid solution may be used in the peeling process.

Moreover, after processing the leading end of connection bar 9 with Ni, by plating with Sn, and neutralizing, plating process may be done. In any plating process, a commercial plating solution may be used, and a sodium phosphorate solution may be used in neutralizing process. In any process, sufficient washing in water is desired.

### INDUSTRIAL APPLICABILITY

The capacitor of the present invention is easy in connection when connecting and coupling a plurality of capacitors, saved in connection space, and reduced in size, and is very useful as a capacitor used in hybrid car or the like.

## Claims

1. A capacitor comprising:
a capacitor element formed so that ends of positive and negative electrodes are exposed mutually in reverse directions;
a metal case of cylindrical shape with a bottom including the capacitor element together with an electrolyte, and having one of the electrodes of the capacitor element bonded to the inner bottom; and
a terminal plate having other electrode of the capacitor element bonded to the inner side, and sealing the opening of the metal case;
wherein a flat junction part is provided at a surface of the terminal plate so as to project higher than a height of the metal case after sealing.

2. The capacitor of claim 1,
wherein the junction part at the surface of the terminal plate is provided at part of a peripheral edge of the terminal plate.

3. The capacitor of claim 1,
wherein the junction part at the surface of the terminal plate is provided at a central part of the terminal plate.

4. The capacitor of claim 1,
wherein an insulating sleeve is fitted to an outer periphery of the metal case.

5. The capacitor of claim 1,
wherein insulating holders are fitted to an upper end and a lower end of the metal case.

6. The capacitor of claim 1, further comprising:
a connection bar for connecting a plurality of the capacitors;
wherein a leading end of the connection bar is plated, and its external terminal is provided near the flat junction part.
